## Europäisches Patentamt

## European Patent Office

## Office européen des brevets

(11) Numéro de publication: **0 332 788 B1**

# FASCICULE DE BREVET EUROPEEN

(45) Date de publication de fascicule du brevet: **22.07.92**

(51) Int. Cl.5: **B01D 61/00**, B01D 71/00, C10M 175/04, C10M 175/06

(21) Numéro de dépôt: **88400638.8**

(22) Date de dépôt: **17.03.88**

(54) **Procédé de traitement des émulsions ou des microémulsions d'huile dans l'eau poluées.**

(43) Date de publication de la demande:
**20.09.89 Bulletin 89/38**

(45) Mention de la délivrance du brevet:
**22.07.92 Bulletin 92/30**

(84) Etats contractants désignés:
**BE CH DE ES GB IT LI NL SE**

(56) Documents cités:
| | |
|---|---|
| EP-A- 0 039 179 | EP-A- 0 041 013 |
| EP-A- 0 223 022 | FR-A- 1 440 105 |
| FR-A- 1 517 389 | FR-A- 2 218 125 |
| FR-A- 2 228 518 | GB-A- 1 456 581 |
| US-A- 3 408 843 | US-A- 3 923 688 |
| US-A- 4 060 488 | |

FETTE, SEIFEN, ANSTRICHMITTEL, vol. 86, no. 1, janvier 1984, pages 18-24, Stuttgart, DE; R. RAUTENBACH et al.: "Die Aufbereitung ölhaltiger Industriewaschwässer durch Mikrofiltration/Ultrafiltration"

CHEMIE INGENIEUR TECHNIK, vol. 60, no. 3, mars 1988, pages 155-161, VCH Verlagsgesellschaft mbH, Weinheim, DE; S. RIPPERGER: "Verfahren zur Mikrofiltration von Prozesslösungen und ihre Anwendungen"

(73) Titulaire: **SOCIETE DES CERAMIOUES TECHNIOUES**

**F-65460 Bazet(FR)**

(72) Inventeur: **Falletti, Florence**
**9 quai de Verdun**
**F-73000 Chambéry(FR)**

(74) Mandataire: **Weinmiller, Jürgen et al**
**Lennéstrasse 9 Postfach 24**
**W-8133 Feldafing(DE)**

Rank Xerox (UK) Business Services

## Description

La présente invention concerne un procédé de traitement des émulsions ou des microémulsions d'huile dans l'eau polluées, utilisées notamment comme fluides au cours des opérations d'usinage, et appelées habituellement fluides de coupe aqueux.

Les fluides de coupe aqueux sont définis par la norme internationale ISO 6743/7 - (T60-504) - 1986. Il s'agit d'émulsions ou de microémulsions constituées à partir de concentrats qui sont des mélanges d'agents émulsifiants et d'additifs appropriés avec des huiles minérales raffinées, diluées dans l'eau.

Ces fluides de coupe aqueux sont contaminés au cours de leur utilisation, par des particules métalliques issues de l'usinage des pièces, par des huiles étrangères provenant de fuites de la machine-outil et par des bactéries. Afin de limiter cette contamination, il existe des dispositifs d'épuration grossière ayant pour but l'élimination des contaminants physiques (copeaux, débris) et des huiles étrangères.

L'élimination des contaminants physiques peut se faire par :
- des séparateurs magnétiques,
- un dragage de l'émulsion sale dans la cuve même contenant l'émulsion,
- une filtration sur des filtres en papier sous pression ou par dépression, ou sur des filtres à diatomées,
- des hydrocyclones,
- des épurateurs centrifuges.

L'élimination des huiles étrangères peut s'effectuer :
- par dragage en surface, au niveau de la cuve d'émulsion usagée,
- par centrifugation, soit de la totalité de l'émulsion, soit de la couche superficielle par l'intermédiaire d'une crépine flottante.

Tous ces systèmes d'épuration grossière sur machines n'étant pas suffisamment efficaces, on retrouve dans les fluides de coupe une partie des polluants cités ci-dessus.

Lorsque cette contamination devient trop importante, les fluides de coupe aqueux de remplissent plus correctement leurs fonctions ; il est alors procédé à leur remplacement et à leur envoi dans un centre de traitement conventionné pour élimination, et ceci de façon périodique. En effet le rejet à l'égoût de toute huile émulsionnée ou non est interdit, car le rejet de ces fluides usagés dans le milieu naturel représente un danger du fait, d'une part de leur composition chimique et, d'autre part, des polluants qu'ils contiennent.

On connaît comme procédé de traitement des procédés de filtration tangentielle des émulsions mettant en oeuvre divers types de supports associés à une membrane d'ultrafiltration dont le diamètre des pores est compris entre 40 Å et 1000 Å.

Il est indiqué par exemple dans le "Guide d'emploi des fluides de coupe" édité le CETIM volume 1, 1979 page 183, que le module d'ultrafiltration sépare alors un ultrafiltrat pratiquement exempt d'huile et un retentat très concentré en huile qui devient inutilisable comme fluide de coupe et qui est destiné à la destruction.

Il est mentionné par ailleurs par B. BARTOLI (C.E.A.) dans l'article "La séparation des émulsions par ultrafiltration", extrait d'un document CETIM "Les fluides de Coupe aqueux" 21-23 novembre 1978 page 101, qu'un procédé d'ultrafiltration entraîne la séparation de l'émulsion polluée en une phase aqueuse et une phase huileuse destinée à être détruite.

Autrement dit, si l'on applique un procédé d'ultrafiltration tangentielle aux fluides de coupe, on élimine bien les polluants, mais on sépare le phase huileuse de la phase aqueuse, autrement dit on détruit l'émulsion.

La présente invention a pour but de mettre en oeuvre un procédé de traitement par filtration tangentielle permettant l'élimination des polluants, sans détruire pour autant l'émulsion ou la microémulsion d'huile dans l'eau, c'est-à-dire permettant la régénération de cette émulsion.

La présente invention a pour objet un procédé de traitement des émulsions ou des microémulsions d'huile dans l'eau polluées, procédé mettant en oeuvre une filtration tangentielle à travers au moins une membrane, caractérisé par le fait que ladite membrane est une structure poreuse de microfiltration au moins superficiellement en oxyde de titane.

Une telle membrane est, soit une membrane comportant une structure poreuse dont la surface des pores est entièrement recouverte d'un film d'oxyde de titane, soit une structure poreuse constituée entièrement de grains frittés d'oxyde de titane.

Dans le cas d'une membrane constituée par la superposition de plusieurs couches, c'est la couche superficielle qui a les pores de plus petit diamètre qui assure la fonction de filtration.

On a observé que, de façon tout à fait surprenante, lorsque l'on utilisait cette membrane particulière, il ne se produisait pas de séparation de la phase huileuse et de la phase aqueuse de l'émulsion, qui gardait ainsi toutes ses propriétés intrinsèques, et notamment son pouvoir lubrifiant. Cette émulsion régénérée pouvait donc être recyclée dans les machines.

Selon un mode préférentiel de mise en oeuvre du procédé, ladite membrane de microfiltration présente au niveau de sa couche superficielle microporeuse des pores dont le diamètre est compris entre 0,2 micron et 15 microns, et de préférence entre 3 microns et 8 microns.

Lorsque ladite membrane comporte une structure poreuse dont la surface des pores est entièrement recouverte d'un film d'oxyde de titane, le matériau de cette structure poreuse peut être choisi parmi la céramique frittée, les métaux frittés, le carbone microporeux, le verre microporeux. Dans ce cas le film d'oxyde de titane a une épaisseur comprise entre 0,1 % et 10% du diamètre moyen des pores de ladite couche superficielle microporeuse.

Avant tout cycle de régénération ladite membrane doit être parfaitement propre et chimiquement neutre.

Le procédé selon l'invention est de préférence mis en oeuvre à une température comprise entre 15°C et 35°C. La pression de filtration peut être comprise entre 1 et 5 bars, et est de préférence de l'ordre de 2 à 2,5 bars.

La vitesse de circulation tangentielle est comprise entre 1 mètre par seconde et 4 mètres par seconde, et de préférence de l'ordre de 2 mètres par seconde.

L'émulsion dans sa cuve est de préférence soumise à une légère agitation de manière à ce que la répartition en éléments polluants soit relativement homogène.

La membrane doit être soumise régulièrement à un décolmatage.

D'autres caractéristiques et avantages de la présente invention apparaîtront au cours de la description suivante d'un exemple de mise en oeuvre du procédé selon l'invention, donné à titre illustratif mais non limitatif.

Dans le dessin annexé :
- La figure 1 montre très schématiquement un dispositif de microfiltration selon l'invention,
- La figure 2 montre schématiquement en bout en élément filtrant ou membrane appartenant au dispositif de la figure 1.

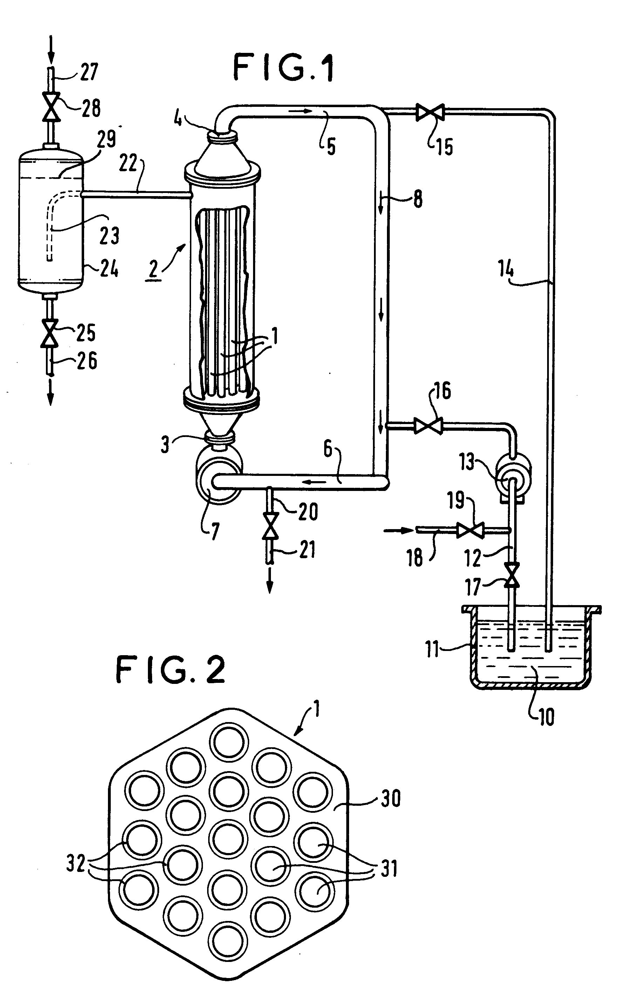

On voit dans la figure 1 le schéma d'une installation de filtration de type "boucle semi-ouverte". Elle comporte un ensemble d'éléments filtrants 1, ou membranes, sensiblement cylindriques et disposés parallèlement les uns aux autres dans un carter 2 en acier inoxydable dont on a référencé 3 et 4 respectivement l'entrée et la sortie. Les éléments 1 seront décrits en détail plus loin. La sortie 4 est reliée à l'entrée 3 par un ensemble de tuyauteries 5, 6 associées à une pompe de circulation 7. Les flèches 8 indiquent le sens de circulation normal du fluide dans la boucle de filtration.

L'émulsion ou la microémulsion 10 à traiter est stockée dans une cuve 11 reliée à la tuyauterie 5 par une tubulure 12 munie d'une pompe d'alimentation 13 et de deux vannes 16 et 17. Par ailleurs un tuyau 14 muni d'une vanne 15 relie la sortie 4 du carter 2 à la cuve 11. Une tubulure 18 associée à une vanne 19 aboutit dans la tubulure 12 en vue d'une injection éventuelle d'eau chaude et de détergents. Au niveau de la tuyauterie 6 est prévue une tubulure 20, associée à une vanne 21 et destinée à l'evacuation de rétentat. Quant au perméat, il sort à la partie supérieure du carter 1 par une tubulure 22 qui aboutit, recourbée vers le bas en 23, dans un ballon 24 dont la sortie, associée à une vanne 25 est référencée 26. Ce ballon comporte en outre une tubulure d'entrée 27 associée à une vanne 28 destinée à permettre l'introduction d'air comprimé. Toute la tuyauterie de l'installation est en acier inoxydable.

Chaque élément filtrant, précédemment appelé membrane, visible en bout dans la figure 2, comprend un support macroporeux en alumine frittée de section sensiblement hexagonale dans lequel est ménagée une pluralité de canaux 31 parallèles entre eux. La porosité de ce support macroporeux est telle que le diamètre de ses pores est de l'ordre de 15 microns. La paroi interne de ces canaux est revêtue d'une ou plusieurs couches microporeuses constituées par des grains d'alumine frittés. L'ensemble de la surface intérieure et de la surface extérieure de la structure poreuse de l'élément filtrant est recouvert d'un film mince et continu d'oxyde de titane. Le diamètre des pores de la couche supérieure de cette membrane est de l'ordre de 5 microns. L'épaisseur du film d'oxyde de titane est de l'ordre de 50 Å.

Le fluide à régénérer 10 est une émulsion ou une microémulsion d'huile dans l'eau. Il s'agit par exemple de fluides références MAA, MAC, MAD, MAE dans la norme ISO citée plus haut. On entend par
- MAA : un concentrat donnant, en mélange avec l'eau une émulsion laiteuse possédant des propriétés anti-corrosion,
- MAC : un concentrat de type MAA possédant en outre des propriétés dites "extrême pression",
- MAD : un concentrat possédant des propriétés de réduction de frottement et des propriétés dites "extrême pression",
- MAE : un concentrat donnant en mélange avec l'eau, des émulsions translucides, ou microémulsions, possédant des propriétés anti-corrosion.

Le traitement s'effectue à la température ambiante de la manière suivante :
Les vannes 19, 21 et 27 sont fermées ; les vannes 15, 16, 17, et 25 sont ouvertes. Grâce aux pompes 13 et 7, le fluide 10 est mis en circulation dans les éléments filtrants 1 du carter 2. Le débit est de l'ordre de 1 m3 heure par m2 de surface de membrane 32. La vitesse de circulation tangentielle est de 2 mètres par seconde. La pression moyenne de filtration est de 2 à 2,5 bars.

Grâce à l'ouverture de la boucle de filtration par le tuyau 14 et la vanne 15, il se produit dans la cuve 11 une circulation et une certaine agitation du fluide 10 qui permet une homogénéisation des polluants dans tout le volume de ce fluide.

Pendant chaque cycle de régénération, on effectue automatiquement plusieurs décolmatages des membranes 32 par contre-pression dans la boucle. Le principe de ce procédé est décrit dans une publiciation de S. Galaj, A. Wicker, J.P. Dumas, J. Gillot et D. Garcera dans la Revue "Le Lait" 1984, 64, p. 129-140. Dans ce cas, les vannes 15, 16 et 25 sont fermées, et la vanne 28 est ouverte. On envoie de l'air comprimé sous une pression de 10 bars dans le ballon 24 qui contient initialement du perméat jusqu'au niveau référencé 29. Le perméat circule alors en sens inverse dans les éléments filtrants 1 et le flux tangentiel chargé de polluants est éliminé au niveau de la tubulure 20.

Après la mise en oeuvre d'un cycle complet de régénération selon l'invention, on obtient à partir de 1200 litres de fluide 10 pollué, 1180 litres de fluide de coupe régénéré et prêt à être immédiatement réutilisé, et 20 litres de rétenant à détruire, soit moins de 2 % du volume initial du fluide. De manière tout à fait remarquable, cette régénération peut être effectuée plusieurs fois sur le même fluide de coupe sans qu'il perde ses propriétés.

Entre chaque régénération il convient de nettoyer les éléments filtrants ou membranes 1 de manière à les rendre parfaitement propres et chimiquement neutres. Pour cela on opère de la façon suivante :

on ouvre la vanne 21 pour évacuer le retentat ; on ferme la vanne 17 et on ouvre la vanne 19 pour envoyer dans la boucle de l'eau chaude sous une pression de 1 bar avec des détergents. On effectue un rinçage jusqu'a l'obtention de la neutralité des membranes.

Bien entendu l'invention n'est pas limitée au mode de réalisation qui viennent d'être décrit..

En ce qui concerne en particulier la membrane, la structure poreuse qui sert de support au film d'oxyde de titane peut être en un matériau autre que l'alumine, choisi parmi les matériaux cités plus haut. Ce matériau peut être lui-même l'oxyde de titane.

Pour ce qui est de la pression de filtration, elle peut être choisie entre 1 bar qui correspond à une valeur inférieure limite de débit dès le début du colmatage, et 5 bars qui correspond à un colmatage trop rapide de la membrane.

Pour éviter tout risque de cassure de l'émulsion il est préférable de ne pas sortir de l'intervalle de température compris entre 150°C et 35°C.

Enfin, le dispositif illustré n'a été donné que pour indiquer le schéma du fonctionnement.

## Revendications

1. Procédé de traitement des émulsions ou des microémulsions d'huile dans l'eau polluées, procédé mettant en oeuvre une filtration tangentielle à travers au moins une membrane, caractérisé par le fait que ladite membrane (1) est une structure poreuse de microfiltration au moins superficiellement en oxyde de titane.

2. Procédé de traitement selon la revendication 1, caractérisé par le fait que ladite structure poreuse de microfiltration est constituée d'un support macroporeux (30) et d'au moins une couche microporeuse (32), l'ensemble de ladite structure poreuse étant au moins superficiellement en oxyde de titane.

3. Procédé de traitement selon l'une des revendications précédentes, caractérisé par le fait que le diamètre des pores de la couche superficielle (32) de ladite structure poreuse est compris entre 0,2 micron et 15 microns.

4. Procédé de traitement selon la revendication 3, caractérisé par le fait que le diamètre des pores de la couche superficielle de ladite structure poreuse est compris entre 3 microns et 8 microns.

5. Procédé de traitement selon des revendications précédentes, caractérisé par le fait que ladite structure poreuse est en un matériau choisi parmi la céramique frittée, les métaux frittés, le carbone microporeux, le verre microporeux, la surface extérieure et la surface intérieure des pores de ladite structure poreuse étant recouvertes d'un film mince et continu d'oxyde de titane.

6. Procédé de traitement selon la revendication 5, caractérisé par le fait que l'épaisseur dudit film est comprise entre 0,1 % et 10 % du diamètre moyen des pores de la couche microporeuse superficielle.

7. Procédé de traitement selon l'une des revendications 1 à 4, caractérisé par le fait que ladite structure poreuse est constituée de grains d'oxyde de titane frittés.

8. Procédé de traitement selon l'une des revendications précédentes, caractérisé par le fait que la température de traitement est comprise entre 15°C et 35°C.

9. Procédé de traitement selon l'une des revendications précédentes, caractérisé par le fait que la pression de filtration est comprise entre 1 et 5 bars.

10. Procédé de traitement selon la revendication 9, caractérisé par le fait que la pression de filtration est comprise entre 2 et 2,5 bars.

11. Procédé de traitement selon l'une des revendications précédentes, caractérisé par le fait que la vitesse de circulation tangentielle de l'émulsion ou de la microémulsion est comprise entre 1 mètre par seconde et 4 mètres par seconde.

12. Procédé de traitement selon la revendication 11, caractérisé par le fait que la vitesse de circulation tangentielle est de l'ordre de 2 mètres par seconde.

13. Procédé de traitement selon l'une des revendications précédentes, caractérisé par le fait que ladite émulsion, ou microémulsion, est soumise dans sa cuve de stockage à une légère agitation permettant une répartition homogène des éléments polluants.

## Claims

1. A method of treating polluted oil-in-water emulsions or microemulsions, said method implementing tangential filtration through at least one membrane and being characterized by the fact that said membrane (1) has a porous microfiltration structure which is constituted, at least on the surface thereof, by titanium oxide.

2. A method of treatment according to claim 1, characterized by the fact that said porous microfiltration structure is constituted by a macroporous support (30) and at least one microporous layer (32), said porous structure as a whole being at least superficially constituted by titanium oxide.

3. A method of treatment according to any preceding claim, characterized by the fact that the diameter of the pores in the surface layer (32) of said porous structure lies between 0.2 microns and 15 microns.

4. A method of treatment according to claim 3, characterized by the fact that the diameter of the pores in the surface layer of said porous structure lies between 3 microns and 8 microns.

5. A method of treatment according to any preceding claim, characterized by the fact that said porous structure is made of a material selected from: sintered ceramics, sintered metals, microporous carbon, and microporous glass; with the outside surface and the surface inside the pores of said porous structure being covered in a thin and continuous film of titanium oxide.

6. A method of treatment according to claim 5, characterized by the fact that the thickness of said film lies between 0.1% and 10% of the mean diameter of the pores of the microporous surface layer.

7. A method of treatment according to any one of claims 1 to 4, characterized by the fact that said porous structure is constituted by sintered grains of titanium oxide.

8. A method of treatment according to any preceding claim, characterized by the fact that the treatment temperature lies between 15°C and 35°C.

9. A method of treatment according to any preceding claim, characterized by the fact that the filter pressure lies between 1 bar and 5 bars.

10. A method of treatment according to claim 9, characterized by the fact that the filter pressure lies between 2 bars and 2.5 bars.

11. A method of treatment according to any preceding claim, characterized by the fact that the speed of tangential flow of the emulsion or the microemulsion lies between 1 meter per second and 4 meters per second.

12. A method of treatment according to claim 11, characterized by the fact that the speed of tangential flow is about 2 meters per second.

13. A method of treatment according to any preceding claim, characterized by the fact that said emulsion, or microemulsion, is subjected to light stirring in its storage tank, thereby uniformly distributing its pollution contents.

## Patentansprüche

1. Verfahren zur Behandlung von verunreinigten Öl-in-Wasser-Emulsionen oder -Mikroemulsionen, wobei dieses Verfahren eine tangentiale Filterung durch mindestens eine Membran verwendet, dadurch gekennzeichnet, daß diese Membran (1) eine poröse Mikrofiltrierstruktur ist, die zumindest an der Oberfläche aus Titanoxid besteht.

2. Behandlungsverfahren nach Anspruch 1, dadurch gekennzeichnet, daß diese poröse Mikrofiltrierstruktur aus einem makroporösen Träger (30) und mindestens einer mikroporösen Schicht (32) besteht, wobei die Gesamtheit dieser porösen Struktur zumindest oberflächlich aus Titanoxid besteht.

3. Behandlungsverfahren nach einem der vorhergehenden Ansprüche, dadurch gekennzeichnet, daß der Durchmesser der Poren der Oberflächenschicht (32) dieser porösen Struktur zwischen 3 Mikron und 8 Mikron liegt.

4. Behandlungsverfahren nach Anspruch 3, dadurch gekennzeichnet, daß der Durchmesser der Poren der Oberflächenschicht dieser porösen Struktur zwischen 3 und 8 µm liegt.

5. Behandlungsverfahren nach einem der vorhergehenden Ansprüche, dadurch gekennzeichnet, daß diese poröse Struktur aus einem Material besteht, das aus gesinterter Keramik, gesinterten Metallen, mikroporösem Kohlenstoff und mikroporösem Glas ausgewählt wird, wobei die äußere Oberfläche und die innere Oberfläche der Poren dieser porösen Struktur mit einem dünnen und durchgehenden Film aus Titanoxid bedeckt sind.

6. Behandlungsverfahren nach Anspruch 5, dadurch gekennzeichnet, daß die Dicke dieses Films zwischen 0,1 und 10% des mittleren Durchmessers der Poren der mikroporösen Oberflächenschicht liegt.

7. Behandlungsverfahren nach einem der Ansprüche 1 bis 4, dadurch gekennzeichnet, daß diese poröse Struktur aus gesinterten Titanoxidkörnern besteht.

8. Behandlungsverfahren nach einem der vorhergehenden Ansprüche, dadurch gekennzeichnet, daß die Behandlungstemperatur zwischen 15°C und 35°C liegt.

9. Behandlungsverfahren nach einem der vorhergehenden Ansprü-che, dadurch gekennzeichnet, daß der Filtrierdruck zwischen 1 und 5 Bar liegt.

10. Behandlungsverfahren nach Anspruch 9, dadurch gekennzeichnet, daß der Filtrierdruck zwischen 2 und 2,5 Bar liegt.

11. Behandlungsverfahren nach einem der vorhergehenden Ansprüche, dadurch gekennzeichnet, daß die tangentiale Strömungsgeschwindigkeit der Emulsion oder der Mikroemulsion zwischen 1 Meter pro Sekunde und 2 Metern pro Sekunde liegt.

12. Behandlungsverfahren nach Anspruch 11, dadurch gekennzeichnet, daß die tangentiale Strömungsgeschwindigkeit etwa 2 Meter pro Sekunde beträgt.

13. Behandlungsverfahren nach einem der vorhergehenden Ansprüche, dadurch gekennzeichnet, daß die Emulsion oder Mikroemulsion in ihrem Lagerbehälter einer leichten Bewegung unterworfen wird, die eine homogene Verteilung der Schmutzteilchen ergibt.

# FIG.1

# FIG.2